# EUROPEAN PATENT APPLICATION

(11) **EP 1 084 879 A2**
(43) Date of publication of application: **21.03.2001**
(21) Application number: 00500189.6
(22) Date of filing: 18.08.2000
(51) Int. Cl.: B60J 1/16, B60J 10/04

(54) **Sliding window for motor vehicles**

(30) Priority: 15.09.1999 ES 9902048
(71) Applicant: Construcciones Radio Electro-Mecanicas Sistemas de Automocion, S.L., 08272 Sant Fruitos de Bages (ES)
(72) Inventor: Vazquez Urango, Emilio José, 08272 Sant Fruitos de Bages (ES); Kirby, Stuart, 08272 Sant Fruitos de Bages (ES)
(74) Representative: SUGRANES - VERDONCES - FERREGÜELA

(57) **Abstract**

Sliding window (1) for motor vehicles, comprising a glass (2) totally free of externally visible marks; guiding means constituted by at least a longitudinal guiding profile (9, 39), integral to the vehicle bodywork (11) or door (36) of the vehicle; sealing means for the closed position; blocking and opening means; and tilting means. The opening movement of window (1) is done by tilting the glass (2) about an axle-pivot (14), so that the rear part of the glass stays open at a certain horizontal opening angle with respect to the bodywork, adopting a half-open position, and thereafter moving the window glass backwards in a sliding movement a slider (8) along the guiding profile (9), the closed position being reversible from the opening or intermediate position.

## Description

### Technical sector of the invention.-

The present invention relates to a sliding window for motor vehicles, of the type which are operative between a closed position, in which the window is essentially flush with the outer side of a door or of the bodywork of a motor vehicle, closing an opening formed on the latter, and an opening position, being guided and supported by guiding means, the sliding window comprising a sealing means for the closed position and blocking and opening means.

The window object of the present invention, can be used both for newly designed and existing vehicles and an application can be found in private vehicles of the van kind, commercial vehicles, ambulances, pick-up trucks and the like.

### State of the Art.-

Right from the beginning of the motor industry, it has been usual that vehicles, for obvious fresh air, interior, ventilation needs, have windows with moving glass, whether by electrical or mechanical means, lowered by a vertical descending movement in order to close the window and by an ascending movement to open it, or sliding glass by a horizontal movement backwards in order to open and return in order to close.

The present state of the Art in this field presents certain problems and drawbacks. First of all, it is possible to say that in four or five-door private cars, when the location of the rear axle is not sufficiently at the back with respect to the chassis, the descent of the window glass of the rear doors is limited by the portion of the bodywork designed to enclose the necessary space for the location of the rear wheels, which in this area of technology is described as "wheel clearing", by which the glass cannot be completely opened. This entails a flow of air in the upper zone of the interior only, which represents a first drawback to be found in the motor industry technology.

On the other hand, many two or three-door vehicles have a second drawback, which consists of the fact that the glass of the side rear window is almost always fixed to the bodywork, without the possibility of being opened, which might be desirable on many occasions.

In any case, the shape, dimensions and movements of the glass of the windows that can be opened, lowered and/or slid-open, i.e. those intended to be opened and closed by descending movement, ascending movement, backward sliding and return horizontal sliding of the glass, is imperatively conditioned largely by the overall design of the vehicle, in particular, of the shapes of the bodywork and the doors, both from an aesthetic and safety and aerodynamic point of view. As a consequence of this condition, in many cases the constitution and functionality of such windows are not the optimum, so that when the windows are partially or totally open, uncomfortable turbulence and unpleasant problems of an acoustic kind appear in the interior of the vehicle, noticeable even in certain vehicles at the top of the range, which constitutes a third drawback.

Another drawback is implied by the fact that the glass in the windows is generally guided by their edges by rubber seals in which on an interior side a channel is defined by which the glass is slidably guided, the rubber seals being fixed by its outer side to the opening of the door or bodywork frame and which determine simultaneously a watertight closing for the motor car. Therefore, the guiding and watertightness systems integrate a single design unit, so that both systems are bound in a relationship of dependence which normally is inconvenient, given that the improvement of one generally acts to the detriment of the other. Thus, it is frequent for a window which slides easily not to have good watertightness and that, on the contrary, a window which efficiently prevents the entrance of water in the interior of the car compartment in the case of rain, suffers from being difficult to work even manually, even though it is also by motorised means.

For this reason, glass windows that can be slid-down and lowered have been devised similar, with regard to their concept and functionality, to the well-known sliding windows for vans and similar vehicles, which are operative between a closed position, in which the window remains essentially flush with the outer side of the bodywork of a motor vehicle, closing an opening formed on the latter, and an opening position, being guided and supported by guiding means, such as, for example, the window described in the patent N° US 4,850,139. These well-known windows comprise watertight closing means and blocking and opening means.

The windows of this type are applicable to vehicles of a commercial kind or of a van kind, very much in fashion at present, and also permit the opening of the glass without significantly increasing the space required for it, given that the glass remains practically stuck right next to the sides or supports of the same. Nevertheless, the known sliding windows suffer from problems of an aerodynamic kind in that they lie noticeably on a parallel plane to the bodywork or fixed glass of the window as a whole, whereby the aerodynamic resistance coefficient of the vehicle varies notably when the latter is being driven with the window open and patently worsens the aesthetic appearance of the whole.

The aim of the present invention is to provide an efficient, simultaneous solution to each and every one of the previous problems and drawbacks, by providing a window which can be employed in all types of motor vehicles, including private cars, commercial vehicles, vans etc. whether they are of new or existing design in the market and equally applicable to both front and rear, doors, oscillating or sliding doors and to all types of lateral openings made in a bodywork.

### Disclosure of the invention.-

With this aim, the object of the present invention is to disclose a sliding window for motor vehicles, of the aforementioned type, of a totally novel concept and functionality, which is essentially characterised in that the glass of the window being totally free of externally visible marks, the aforesaid guiding means is constituted by at least a longitudinal guiding profile, integral to the vehicle bodywork or door, adjacent to lower edge and/or upper edge of the aforementioned opening and having a respective groove, likewise longitudinal, intended to co-operate with a corresponding and complementary slider integral to glass, arranged in the front and internal part of the latter, the sliding window also comprising tilting means, constituted by at least an axle-pivot integral to a slider and intended to be articulated and slidably inserted in the longitudinal direction on the inside of groove of a corresponding guiding profile, all of this it adapted in such a way that the opening movement of window is done, from its closed position in which it is made flush with the outer side of the bodywork or door, tilting glass about the aforementioned axle-pivot, so that the rear part of the glass stays open at a certain horizontal opening angle with respect to the bodywork, adopting a half-open position, and thereafter moving the window glass backwards in a sliding movement of slider along guiding profile, while maintaining the aforesaid horizontal opening angle, and the closed position being reversible from the opening or intermediate position, effecting inverse movements to the previous sequence of movements.

According to another feature of the window object of the present invention, the aforesaid blocking and opening means, are constituted by at least one retractable, articulated lever of tilting axis and curvoconcave arms with respect to the interior part of vehicle, integral to bodywork or door of the latter and adjacent to the rear edge and /or the front edge of opening, whose resistance arm is equipped with a hook-shaped end, adapted to be locked in and unlocked out of a complementary housing which glass is provided with, all of this adapted in such a way that in the closed position, the hook is locked in the housing, the leverage arm of lever is held and immobilised, lever as a whole is retracted back and the glass immobilised with respect to the bodywork or door, acquiring the half-open position from the said closed position, pulling leverage arm manually to free it from its retention and immobilisation position, with which the lever turns about its fulcrum axis and extends so that its resistance arm pushes glass of window outwards, and acquiring the opening position of the window from the aforesaid intermediate position upon pulling of the slider, moving it backwards, and sliding window glass along the guiding profile/s thanks to the unlocking of hook from the housing.

In accordance with another feature of the present invention, the sealing means is constituted, in the bodywork, in the door of vehicle, or in the internal frame of the window itself, by a continuous seal, made of rubber or a similar sealing material, which completely covers the periphery of opening.

According to a further feature of the present invention, the sliding window comprises a means for restricting the longitudinal backward movement of glass, constituted by at least one stop integral to the interior side of the glass, adjacent to and essentially centred with respect to its lower edge and/or upper edge, which is operative by making contact with end-of-course switch of the corresponding guiding profile, the maximum opening of the window being thus restricted by the maximum backward movement permitted by the said stop(s).

The present invention is also characterised in that the sliding window comprises a means for restricting the longitudinal forward movement of the glass, constituted by at least one fitting integral to the interior side of the glass, and by a corresponding and complementary projecting part integral to front edge of opening of bodywork or door.

According to a yet further feature of the present invention, the sliding window comprises a frame whose form is adapted to opening of bodywork or door and intended to receive the mounting of guiding profile of the retractable, articulated lever, of the projecting parts and of the rubber seal, all of this in such a way that the assembly whole is capable of being mounted in a suitable opening, formed for that purpose on the bodywork or a door of any previously existing motor vehicle or indistinctly during a phase in the manufacturing process of a new motor vehicle.

Preferably, at least one of the sliders is adapted to be held by a user's hand in order to carry out the longitudinal movement of the window manually.

According to an embodiment of the window of the present invention, the aforementioned sliders are equipped with a locking means for the position of the window, which allows the locking of the latter in specific predetermined positions with the aim of establishing safety positions.

The said locking means are preferably formed by at least one housing provided in the corresponding guiding profile and adapted to receive the insertion and do the blocking of axle-pivot of sliders.

Preferably, the locking means of the aforementioned safety positions is automatic.

In particular, the sliding window comprises a means for automatically operating the different movements of the window.

Those skilled in the art will appreciate that thanks to the novel features of the present invention, the window which is the object of the same enjoys the following additional advantages, solving in an efficient and simultaneous way the stated drawbacks and problems:
- it allows the glass windows of the vehicle to be completely aligned with its bodywork;
- it facilitates the possibility of having an uncovered glass window, without the need for an outer frame or adornment;
- it allows multiple combinations to be carried out between the degrees of opening of the different windows of the vehicle;
- it allows for predetermined openings of the glass;
- it facilitates a greater degree of freedom in the design of the vehicle
- the watertightness means and the guiding means are independent from each other, which favours a greater flexibility and freedom in the design of the bodywork;
- the rear closing system, in the case of there being one, can be disengaged, which allows the movement of the glass;
- the incorporation of the second closing lever of the blocking means, which answers to design specifications of the manufacturer, permits the tilting and movement to be done by a manual operation on a single mechanism or on both at the same time;
- it allows the easy automation of the different movements and locking of the parts for the opening and closing of the window;
- the guide over a single guiding profile significantly simplifies the manufacture and installation of the whole;
- in addition to a particular design of the window, it can be easily incorporated into an already existing vehicle without the need to have to carry out modifications on its bodywork and /or chassis, nor in the assembly process of the same.

### Brief Description of the Drawings.-

Below, a description is made of the preferred, but not exclusive form of embodiment of the sliding window object of the present invention, with some accompanying drawings for its better understanding, given merely by way of non-restrictive example, in which:
Fig.1 is a diagrammatic perspective view, which illustrates a sliding window according to the invention, installed in a vehicle, in which the window is represented in its closed position, seen from the interior of the vehicle and from above;
Fig.2 is an analogous view of Fig.1, although in this case the window being represented as seen from the exterior of the vehicle;
Each of Figs 3, 4 and 5 are views in perspective, analogous to Fig.1, each showing the window in closed position, half-opened and open position, respectively;
Fig.6 is an elevation profile view of the window of the previous figures, in the closed position of the same;
Fig.7 is an analogous view of that of Fig.6, although with the window viewed indistinctly in its half-opened or open position;
Figs. 8, 9 and 10 are each views in perspective from above and from the exterior part of the vehicle, corresponding to the closed, half-opened and open positions respectively of the window;
Fig.11 is a perspective view, from the interior of the vehicle, which shows a detail of the axle-pivot and pin of the guiding means, free of the stop and of the slider, respectively, for the sake of clarity;
Fig.12 is a perspective view which illustrates the operation mode and the installation of the window in accordance with the invention installed in a side of a private motor vehicle;
Fig.13 is a perspective view similar to Fig. 12, but in which the window in accordance with the invention has been mounted in a back door of a van type motor vehicle: and
Fig.14 is an analogous view of Fig. 13, which shows a case of a window with a sliding front glass and a fixed rear glass.

### Detailed Description of the Drawings.-

In the aforementioned drawings it can be seen the constitution and operation mode of sliding window 1, applicable to motor vehicles of all types, which is operative between a closed position, in which the window is essentially flush with the outer side 12 of bodywork 11 or of a door 36 of motor vehicle 10, closing a corresponding opening 3 made on bodywork 11 or door 36, and an opening position, in which window 1 is guided and supported by guiding means.

In the drawing it can equally be appreciated that glass 2 of sliding window 1, object of the present invention, is totally free of frames.

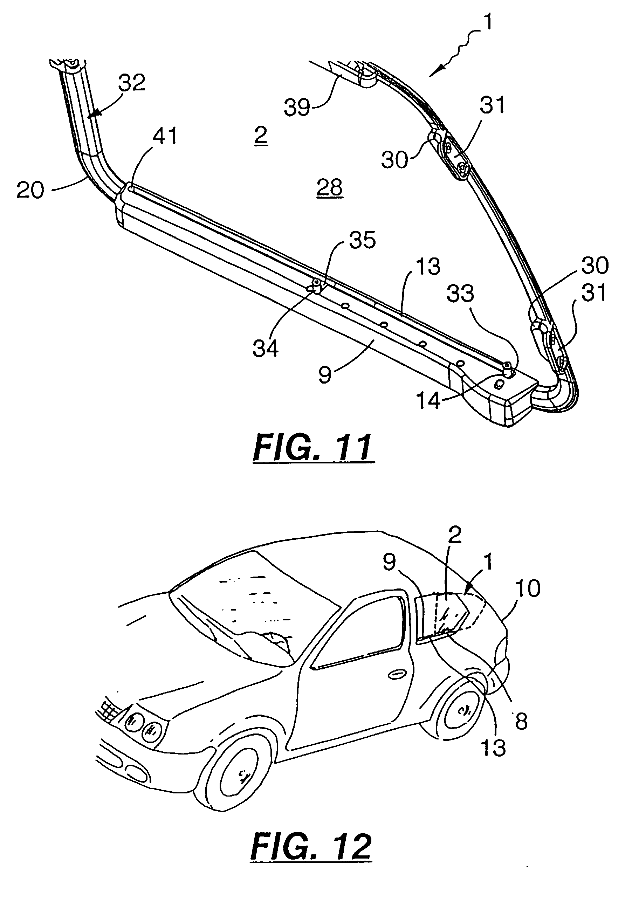

In particular, in Figs 12, 13 and 14 each motor vehicle is shown which incorporates corresponding sliding windows 1 in accordance with the invention, installed in different positions of the vehicle in question, which illustrate in a particular way, the operation mode of the object of the invention. In the aforesaid Figs. 12, 13 and 14 window 1 is shown in its open position.

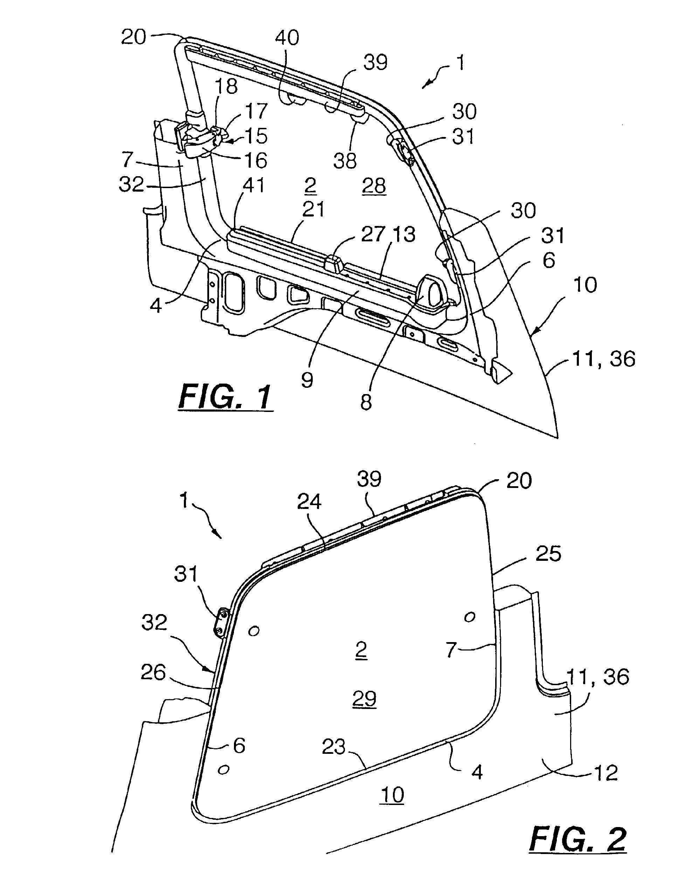

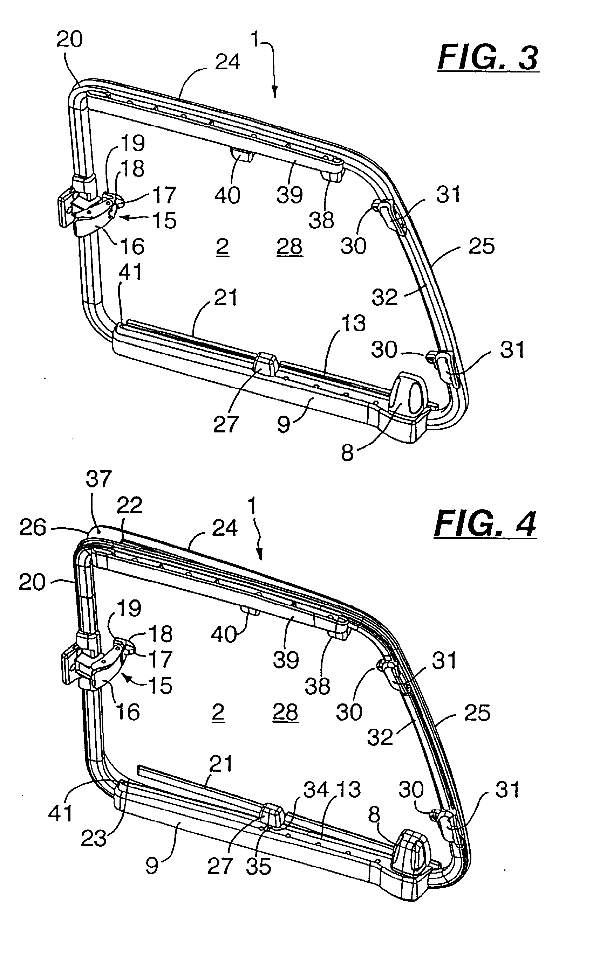

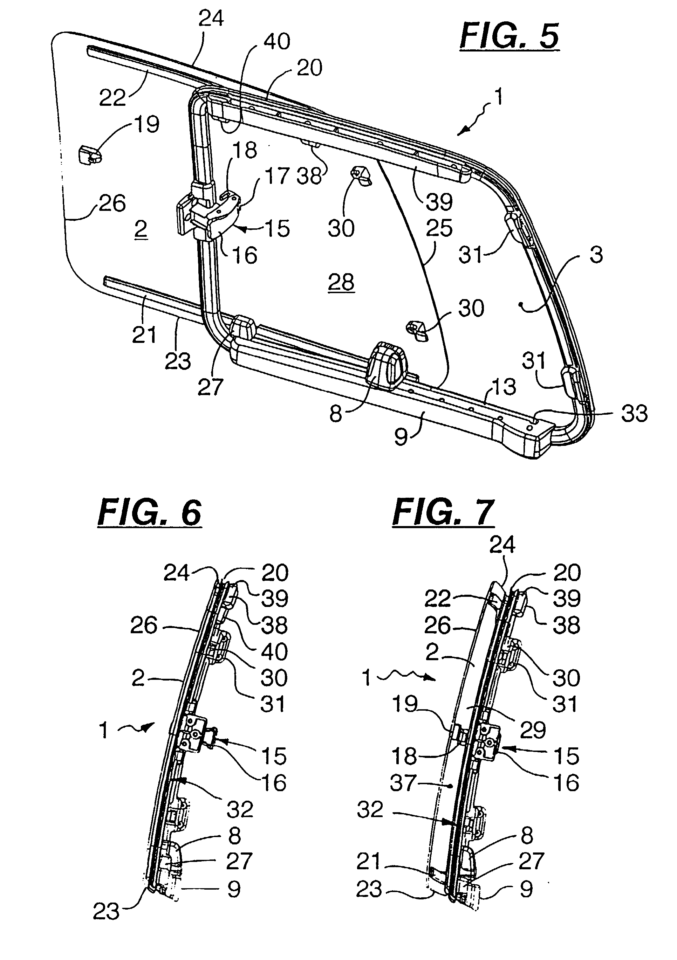

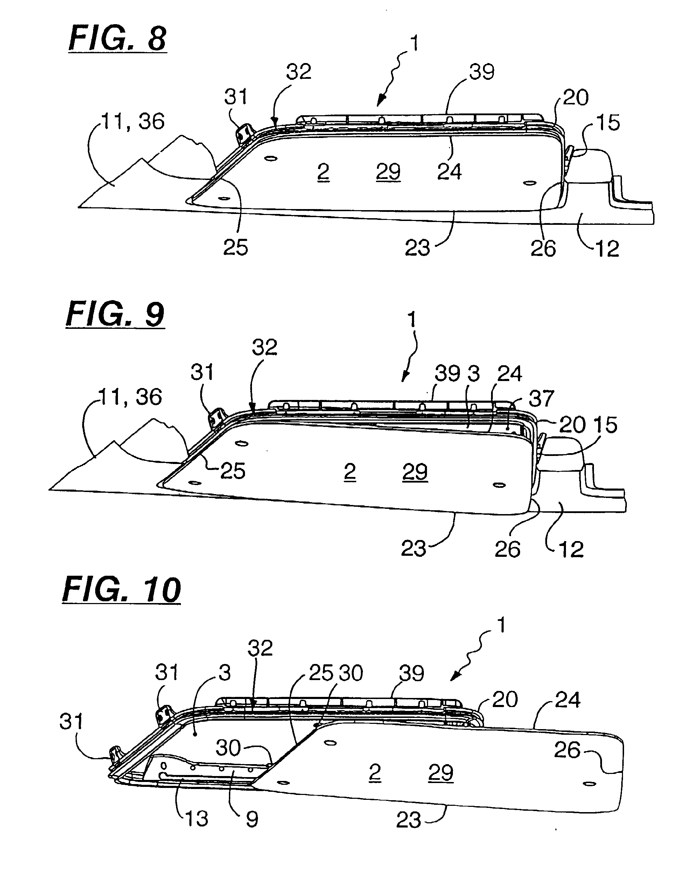

Figs. 1, 2, 3, 6 and 8 are views taken from different angles, in which the closed position of window 1 can be made out, while Figs. 5, 10 and 12 correspond to the open position of the same. In Figs. 4 and 9 a half-open position of window 1 is represented, which will be explained later on. Fig. 7 can correspond both to the half-open position and the open position of sliding window 1, as described below.

The guiding means comprises, in the form of embodiment which is illustrated and described, a lower guiding profile 9 and an upper guiding profile 39, integral to bodywork 11 or to the frame of door 36 of vehicle 10 in question, adjacent to lower edge 4 and upper edge respectively of opening 3. The guiding profiles 9 and 39 comprise a groove 13 longitudinal to vehicle 10 and contribute with complementary sliders 8 and 38 integral to glass 2, fixed respectively in the front part of the inner surface 28 of the same.

Even though an embodiment of sliding window 1 has been represented equipped with guiding means both in the upper and lower parts, there is also the possibility, in accordance with the present invention, that such guiding means are arranged only in n lower or upper end of the window.

Each slider 8 and 38 is equipped with a respective axle-pivot 14 integral to the same, which protrudes from it and which is articulated within the corresponding groove 13. The axle-pivot 14 is specially adapted to longitudinally slidably inserted in groove 13 of the guiding profiles 9 and 39. To do so, the lower axle-pivot 14 is particularly distinguishable in Fig.11 and is constituted, by way of example, by a loose roller over an interior axle integral to the lower part of slider 8.

The opening movement of sliding window 1 is carried out, from its closed position in which it is made flush with outer side 12 of bodywork 11 or door 36, making glass 2 tilt over axle-pivot 14, in such a way that the posterior part of the glass stays open forming a certain horizontal opening angle with respect to the bodywork, adopting the said half-open position in which a small rear opening 37 is defined (Figs. 4, 7 and 9). Next, glass 2 is moved backwards longitudinally, in a sliding movement of axle-pivot 14 of each slider 8 and 38 within the corresponding groove 13 of each guiding profile 9 and 39, while maintaining the aforesaid horizontal opening angle.

From the opening position, window 1 can be closed just by reversing the aforementioned succession of actions and movements.

Sliding window 2 comprises an articulated retractable lever 15 with a tilting axle and curved arms 16, 17 concave with respect to the interior part of the vehicle 10, integral to bodywork 11 or the upright of door 36 of vehicle 10. Lever 15 is adjacent to rear edge 7 of opening 3 and its resistance arm 17 is equipped with a hook-shaped end 18, adapted to be locked to and unlocked from a complementary housing 19 formed in glass 2.

In the closed position, hook 18 of lever 15 is locked into housing 19 of glass 2 and its leverage arm 16 is held and immobilised un its rearmost position, with lever 15 remaining retracted and glass 2 is immobilised with respect to bodywork 11.

The half-open position is acquired by subsequently pulling leverage arm 16 forwards to free it from its retention and immobilisation position, lever 15 turns on the axis of its fulcrum and extends towards the exterior so that its resistance arm 17 acts like a cam pushing glass 2 of window 1 outwards. The opening position is acquired by pulling, manually for example, slider 8 backwards, and sliding glass 2 of sliding window 1 over guiding profiles 9 and 39, when the hook 18 is unlocked from 19. As already stated, during this succession of movements, axle-pivot 14 of sliders 8 and 38 slide backwards, guided and held in groove 13 of each of guiding profiles 9 and 39.

The bodywork 11 or the frame of door 36 of the vehicle 10 is equipped with a continuous seal 20, made of rubber or a similar sealing material, which completely covers lower edge 4, upper edge, front edge 6 and rear edge 7 of opening 3. Glass 2 of window 1 comprises a pair of longitudinal profiles 21, 22, adjacent to lower edge 23 and upper edge 24 respectively of glass 2. Seal 20 and profiles 21 and 22 constitute a watertight sealing means of window 1 which, as will be appreciated, are absolutely independent of the guiding means of the same.

Interior side 28 of glass 2 comprises of a lower stop 27 and an upper stop 40, integral to interior side 28 of glass 2 on lower edge 23 and upper edge 24 respectively of the same. Each of stops 27 and 40 cooperates with a respective end-of-course switch 41 which each of guiding profiles 9 and 39 is equipped with, with which the former co-operate to perform the braking of the backward sliding movement of glass 2 when stops 27 and 40 make contact with end-of-course switch 41. In the drawings it can be appreciated that, in the embodiment example illustrated, the aforementioned end-of-course switch 41 is constituted by the inner rear wall itself of groove 13 and that stops 27 and 40 are essentially centred in the longitudinal direction of window 1. The situation in the longitudinal direction of lower stop 27 and upper stop 40 with respect to glass 2 limits the maximum opening of window 1. So, in the case illustrated, in the open position of window 1, glass 2 moves back approximately half its length, with which opening 3 stays open in its front half. Obviously, any other version is equally possible and is within the scope of the present invention.

On its front edge 25 the interior side of glass 1 is fitted with two fittings 30 consecutive in height. The front edge 6 of opening 3 of bodywork 11 or door 36 comprises two projecting parts 31, complementary to fittings 30, with which they co-operate mutually in order to limit the forward movement of glass 2 of sliding window 1.

In accordance with the specific embodiment which is illustrated, the bodywork 11 or the door 36, which are designed to receive the mounting of sliding window 1, are equipped with a frame 32, which delimits opening 3 of bodywork 11 or door 36 and which at the same time receives the mounting of the elements of window 1 integral to bodywork 11 or door 36, among them guiding profiles 9 and 39, the retractable articulated lever 15, the projecting parts 31 and rubber seal 20.

Those skilled in the art will easily notice that, thanks to the features explained, sliding window 1 as a whole in accordance with the present invention can be installed easily in an appropriate opening 3 done for that purpose on bodywork 11 or a door 36 of any motor vehicle 10 already previously existing. Obviously, a newly designed vehicle can be designed so that it incorporates as an standard one or several sliding windows 1 of the present invention. In both cases, sliding window 1 of the present invention allows for a greater degree of flexibility in the design of the bodywork and doors of the vehicles, since such a window is adaptable to a bodywork or door of any shape and dimensions.

In Fig. 11 a perspective view from the interior of the vehicle is represented, which particularly illustrates a detail of the lower guiding profile 9 and of the axle-pivot 14 integrated in lower slider 8. Also illustrated in Fig. 11 is a pin 34 incorporated in lower stop 27 and which protrudes below the same, adapted in the same way as axle-pivot 14, to slide with very little or no friction within groove 13. For the sake of clarity, in said Figure. 11, the remaining parts of lower stop 27 and lower slider 8 have deliberately not been represented. Window 1 is represented here in its closed position, with axle-pivot 14 inserted in a widening of groove 13 of lower guiding profile 9 and pin 34 in a corresponding housing 35 formed without break of continuity with respect to groove 13 and arranged perpendicularly with respect to this latter.

With the same aim and even though it is not represented in the drawings, the upper slider 38 and upper guiding profile 39 are fitted with identical or similar elements: groovel3, axle-pivot 14, widening 33, pin 34, housing 35 and end-of-course switch 41.

Housing 35 is designed to receive the insertion of axle-pivot 14 in the open position of window 1, fixing this position in a stable way both when the vehicle is stopped and when it is moving. In the latter case, the stability of the open position is favoured by the air pressure on glass 2 of the window, which creates a force acting on the latter which tends to introduce it into the car compartment, such a being balanced thanks to the strong anchoring of glass 2 in the structure of the vehicle through axle-pivot 14 and pins 34.

As an alternative, guiding profiles 9 and 39 could also consist of multiple housings similar to housing 35 which is represented, arranged between the latter and widening 33, for the locking in an analogous way of sliders 8 and 38 in multiple and corresponding predetermined safety positions distributed longitudinally.

In the present invention it is contemplated that the working of any one of sliders 8 and 38, preferably lower slider 8, and therefore window 1 as a whole, be of a manual kind, in which case the latter is adapted to be grasped by the hand of a user with the aim of doing it manually with a longitudinal sliding movement.

Alternatively, both the working of sliders 8 and 38 and the fixing of the safety positions mentioned can be done automatically.

In a similar way, lever 15 can also be worked automatically, the sliding window 1 thus constituting a totally automated assembly.

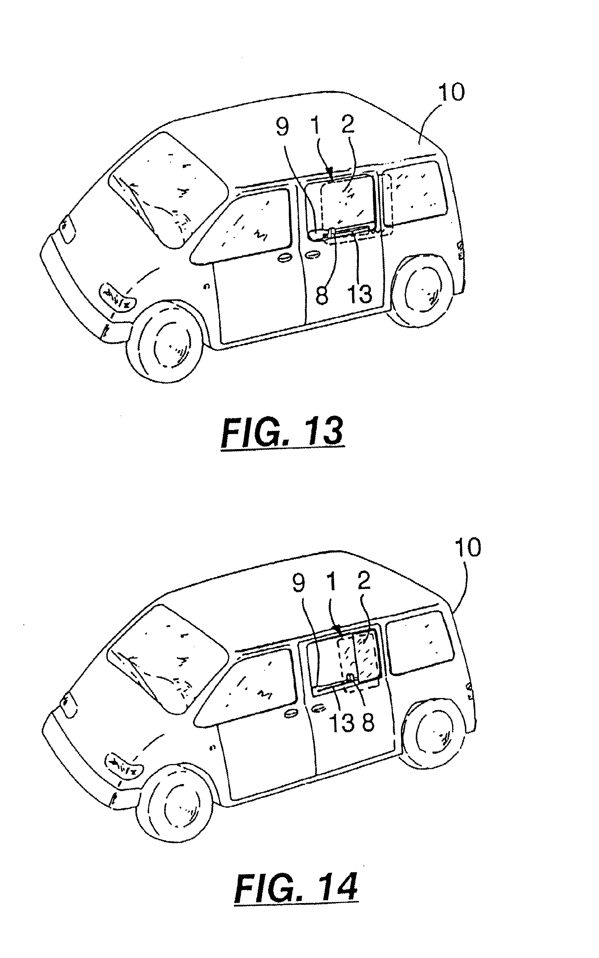

The sliding and tilting window 1 of the present invention allows for multiple installation possibilities and combinations, some of which are quoted below by way of example:
- window with single lowerable and sliding glass in accordance with the invention, applicable to the side of bodywork (Fig.12), rear door (Fig.13) and/or front door;
- combination of lowerable and sliding, front, glass window and fixed rear glass window (Fig.14);
- combination of lowerable and sliding front glass window and lowerable rear glass window;
- combination of lowerable and sliding front glass window and lowerable and sliding rear glass window;
- combination of fixed, front, glass window and lowerable and sliding, rear glass window;
- combination of lowerable, front, glass window and lowerable and sliding rear glass window;

Sliding window 1 of the present invention enjoys the interesting, additional and advantageous feature that it can be understood, manufactured and traded as an "accessory" that can be fitted to an existing vehicle in a car repair-shop or by the user himself, since its adaptation only requires easy assembling operations.

The nature of the present invention being sufficiently described, as well as the manner of putting it into practice, it is here stated that inasmuch as the working principle is not altered or modified, it may undergo variations of detail.

In this sense, window 1 of the present invention is liable to many variations, without departing from its protective scope. Thus, the possibility that lever 15 is situated in the front part of window 1 has been considered, or else that the latter is equipped with more than a lever 15, in which case one will be able to adopt a front position and another a rear one.

The essentials for which a patent of invention is being applied, for twenty years, is that which is summarized in the following claims.

## Claims

1. Sliding window (1) for motor vehicles of the type which are operative between a closed position, in which the window is essentially flush with the outer side (12) of a door (36) or of the bodywork (11) of a motor vehicle (10), closing an opening (3) formed on the latter, and an opening position, being guided and supported by guiding means, the sliding window comprising a sealing means for the closed position and blocking and opening means, characterised in that the glass (2) of the window being totally free of externally visible marks, the aforesaid guiding means is constituted by at least a longitudinal guiding profile (9, 39), integral to the vehicle bodywork or door, adjacent to lower edge (4) and/or upper edge of the aforementioned opening (3) and having a respective groove (13), likewise longitudinal, intended to co-operate with a corresponding and complementary slider (8, 38) integral to glass (2), arranged in the front and internal part of the latter, the sliding window (1) also comprising tilting means, constituted by at least an axle-pivot (14) integral to a slider (8, 38) and intended to be articulated and slidably inserted in the longitudinal direction on the inside of groove (13) of a corresponding guiding profile (9, 39), all of this it adapted in such a way that the opening movement of window (1) is done, from its closed position in which it is made flush with the outer side (12) of the bodywork (11) or door (36), tilting glass (2) about the aforementioned axle-pivot (14), so that the rear part of the glass stays open at a certain horizontal opening angle with respect to the bodywork, adopting a half-open position, and thereafter moving the window glass backwards in a sliding movement of slider (8) along guiding profile (9), while maintaining the aforesaid horizontal opening angle, and the closed position being reversible from the opening or intermediate position, effecting inverse movements to the previous sequence of movements.

2. Sliding window (2) according to claim 1, characterised in that the aforesaid blocking and opening means, are constituted by at least one retractable, articulated lever (15) of tilting axis and curvoconcave arms (16, 17) with respect to the interior part of vehicle (10), integral to bodywork (11) or door (36) of the latter and adjacent to the rear edge (7) and /or the front edge (6) of opening (3), whose resistance arm (17) is equipped with a hook-shaped end (18), adapted to be locked in and unlocked out of a complementary housing (19) which glass (2) is provided with, all of this adapted in such a way that in the closed position, the hook is locked in the housing, the leverage arm (16) of lever (15) is held and immobilised, lever (15) as a whole is retracted back and the glass immobilised with respect to the bodywork or door, acquiring the half-open position from the said closed position, pulling leverage arm (16) manually to free it from its retention and immobilisation position, with which the lever turns about its fulcrum axis and extends so that its resistance arm (17) pushes glass (2) of window (1) outwards, and acquiring the opening position of the window from the aforesaid intermediate position upon pulling of the slider (8), moving it backwards, and sliding window glass along the guiding profile/s (9, 39) thanks to the unlocking of hook (18) from the housing (19).

3. Sliding window (1) according to claim 1 or claim 2, characterised in that the sealing means is constituted, in the bodywork (11), in the door of vehicle (10), or in the internal frame of the window itself, by a continuous seal (20), made of rubber or a similar sealing material, which completely covers the periphery of opening (3).

4. Sliding window (1) according to any one of the previous claims, characterised in that it comprises a means for restricting the longitudinal backward movement of glass (2), constituted by at least one stop (27,40) integral to the interior side (28) of the glass, adjacent to and essentially centred with respect to its lower edge (23) and/or upper edge (24), which is operative by making contact with end-of-course switch (41) of the corresponding guiding profile (9, 39), the maximum opening of the window being thus restricted by the maximum backward movement permitted by the said stop(s) (27).

5. Sliding window (1) according to any one of the previous claims, characterised in that it comprises a means for restricting the longitudinal forward movement of the glass, constituted by at least one fitting (30) integral to the interior side of the glass, and by a corresponding and complementary projecting part (31) integral to front edge (6) of opening (3) of bodywork (11) or door (36).

6. Sliding window (1) according to any one of the previous claims, characterised in that it comprises a frame (32) whose form is adapted to opening (3) of bodywork (11) or door (36) and intended to receive the mounting of guiding profile (9) of the retractable, articulated lever (15), of the projecting parts (31) and of the rubber seal (20), all of this in such a way that the assembly whole is capable of being mounted in a suitable opening, formed for that purpose on the bodywork or a door of any previously existing motor vehicle or indistinctly during a phase in the manufacturing process of a new motor vehicle.

7. Sliding window (1) according to any one of the previous claims, characterised in that at least one of the sliders (8, 38) is adapted to be held by a user's hand in order to carry out the longitudinal movement of the window manually.

8. Sliding window (1) according to any one of the previous claims, characterised in that the aforementioned sliders (8, 38) are equipped with a locking means for the position of the window, which allows the locking of the latter in specific predetermined positions with the aim of establishing safety positions.

9. Sliding window (1) according to claim 8, characterised in that the aforementioned locking means are formed by at least one housing (35) provided in the corresponding guiding profile (9) and adapted to receive the insertion and do the blocking of axle-pivot (14) of sliders (8, 38).

10. Sliding window (1) according to claim 8 or claim 9, characterised in that the locking means of the aforementioned safety positions is automatic.

11. Sliding window (1) according to any one of the previous claims, characterised in that it comprises a means for automatically operating the different movements of the window.
